Europäisches Patentamt

European Patent Office

Office européen des brevets

(19)

(11) **EP 0 864 955 A1**

(12) **EUROPÄISCHE PATENTANMELDUNG**

(43) Veröffentlichungstag:
16.09.1998 Patentblatt 1998/38

(51) Int. Cl.⁶: $G05D\ 23/19$, $F24D\ 19/10$

(21) Anmeldenummer: 98103756.7

(22) Anmeldetag: 04.03.1998

(84) Benannte Vertragsstaaten:
AT BE CH DE DK ES FI FR GB GR IE IT LI LU MC
NL PT SE

(30) Priorität: 14.03.1997 DE 19710645

(71) Anmelder: ROBERT BOSCH GMBH
70442 Stuttgart (DE)

(72) Erfinder:
• Nothdurft, Gerhardt
73230 Kirchheim (DE)
• Boettigheimer, Andreas
72639 Neuffen (DE)

(54) **Anordnung und Verfahren zur Anpassung der Leistung eines Heizgerätes**

(57) Eine Anordnung zur Anpassung der Leistung eines Heizgerätes (1) an den tatsächlichen Wärmebedarf, beispielsweise eines Gebäudes, enthält ein Heizgerät (1), das von einem Steuergerät (2) beeinflußt wird. In den einzelnen Räumen (R1 - Rn) sind thermoelektrisch oder motorisch verstellbare Heizkörperventile (HV) an den Heizkörpern vorgesehen und Raumtemperaturregler (RR1 - RRn), welche die Heizkörperventile beeinflussen und verstellen. Weiterhin ist ein Bussystem (3) vorgesehen, über welches das Steuergerät, die Raumtemperaturregler und die Heizkörperventile informativ miteinander verbindbar sind. Entsprechend dem erfindungsgemäßen Verfahren wird die Heizungsvorlauftemperatur ($T_{VL}$) in Abhängigkeit von der Raumtemperatur ($T_R$) und gegebenenfalls der Öffnungsstellung ($V_S$) der Heizkörperventile mittels des Steuergerätes optimiert und an den tatsächlichen Wärmebedarf angepaßt.

FIG. 1

EP 0 864 955 A1

# Beschreibung

## Stand der Technik

Die Erfindung geht aus von einer Anordnung bzw. einem Verfahren zur Anpassung der Leistung eines Heizgerätes an den tatsächlichen Wärmebedarf durch Regelung der Heizungsvorlauftemperatur gemäß der im Oberbegriff des Anspruchs 1 bzw. 7 definierten Gattung.

Bei einer bekannten Anordnung dieser Art zur Anpassung der Leistung eines Heizgerätes an den Wärmebedarf, beispielsweise eines Gebäudes, ist die Heizungsvorlauftemperatur des Heizgerätes über eine Steuerung bzw. Regelung bestimmbar und innerhalb der einzelnen Räume wird eine Einzelraumtemperaturregelung über das oder die Heizkörperventile vorgenommen.

Bei einer solchen Einzelraumtemperaturregelung stellt jeder Raum einen einzelnen autarken Regelkreis dar. Der Raumregler ist mit dem ihm zugeordneten Stellglied, dem Heizkörperventil, normalerweise in der Lage, die gewünschte Raumtemperatur einzuregeln. Dabei können Raumregler und Stellglied auch in einer Baueinheit als Themostatventil ausgeführt sein. Die Vorlauftemperatur des Heizungswassers wird über eine Steuerung, meist in Form einer witterungsgeführten Regelung, vorgegeben. Bei dieser bekannten Anordnung gibt es keine Rückmeldung der Raumregler über den Zustand in den einzelnen Räumen. Eine Anpassung der Vorlauftemperatur des Heizgerätes an den tatsächlich im Gebäude vorhandenen Wärmebedarf erfolgt nicht. Die Leistung des Heizgerätes entspricht damit dem sich einstellenden Wärmeverbrauch, nicht aber dem tatsächlichen Wärmebedarf.

Generell bekannt ist es, daß bei einer witterungsgeführten Regelung die Heizungsvorlauftemperatur anhand der Außentemperatur und einer dem Gebäude und der Heizungsanlage entsprechenden Heizkurve bestimmt wird. Das Heizgerät regelt seine Vorlauftemperatur auf den entsprechenden Wert, ohne dabei die tatsächlichen Verhältnisse im Gebäude zu berücksichtigen.

Eine andere bekannte Regelung ist die Raumtemperaturregelung mit Führungsraum. Dabei wird insbesondere bei Einsatz in kleineren Gebäuden oder in Etagen ein Raum zum Führungsraum bestimmt. Der Raumregler regelt die Temperatur in diesem Raum und gibt dazu über ein Signal an das Heizgerät die Meldung, ob Wärme benötigt wird oder nicht. Bei dieser Regelungsart geht man davon aus, daß der Wärmebedarf in den anderen Räumen nicht sehr unterschiedlich von dem des Führungsraumes ist. Die einzelnen Räume können mit Themostatventilen ausgestattet sein. Auch bei dieser Regelungsart wird der tatsächliche Wärmebedarf nicht berücksichtigt.

Die vorstehend beschriebenen Regelungs- und Steuerungsarten für die Vorlauftemperatur bzw. den Leistungsbedarf eines Heizgerätes berücksichtigen nicht den in einem Gebäude tatsächlich vorhandenen Wärmebedarf.

## Vorteile der Erfindung

Die erfindungsgemäße Anordnung mit den kennzeichnenden Merkmalen des Anspruchs 1 bzw. das erfindungsgemäße Verfahren mit den kennzeichnenden Merkmalen des grundlegenden Verfahrensanspruchs, hat demgegenüber den entscheidenden Vorteil, daß der Leistungsbedarf des Heizgerätes an den tatsächlichen Wärmebedarf des Gebäudes selbsttätig angepaßt wird. Durch dieses adaptive, sich an die Gegebenheiten anpassende Regelverfahren bzw. die erfindungsgemäße Anordnung ergeben sich verschiedene weitere Vorteile. So wird Energie eingespart und es ergibt sich damit eine Emissionsminderung. Das System ist robust im Hinblick auf Auslegungs- sowie Einstell- und Bedienungsfehler. Der Witterungseinfluß ist reduziert, es entfällt die manuelle Sommer/Winter-Umstellung, die manuelle Heizkurveneinstellung und die manuelle Einstellung der außentemperaturabhängigen Pumpenabschaltung.

Gemäß der Erfindung ist prinzipiell als Anordnung zur Anpassung der Leistung des Heizgerätes vorgesehen, daß das Heizgerät von einem Steuergerät beeinflußt wird, in den einzelnen Räumen thermoelektrisch oder motorisch verstellbare Heizkörperventile an den Heizkörpern und in den Räumen Raumtemperaturregler vorgesehen sind, welche die Heizkörperventile beeinflussen und verstellen, ein Bussystem vorgesehen ist, über welches das Steuergerät, die Raumtemperaturregler und die Heizkörperventile informativ verbindbar sind, und die Heizungsvorlauftemperatur in Abhängigkeit von der Raumtemperatur und der Öffnungsstellung der Heizkörperventile mittels des Steuergerätes optimierbar und an den Wärmebedarf anpaßbar ist.

Durch die in den weiteren Anordnungsansprüchen niedergelegten Maßnahmen sind vorteilhafte Weiterbildungen und Verbesserungen der im Anspruch 1 angegebenen Anordnung zur Anpassung der Leistung des Heizgeräts möglich.

Gemäß einer besonders vorteilhaften Ausgestaltung der erfindungsgemäßen Anordnung wird die Heizungsvorlauftemperatur auf den niedrigst möglichen Wert abgesenkt.

Entsprechend einer besonders vorteilhaften Ausgestaltung der Erfindung erfolgt eine Änderung der Heizungsvorlauftemperatur dann, wenn die Raumtemperaturdifferenz $\Delta T_R = T_{soll} - T_{ist}$ eine bestimmte positive Größe überschreitet bzw. eine bestimmte negative Größe unterschreitet.

In weiterer zweckmäßiger Ausgestaltung der erfindungsgemäßen Anordnung erfolgt die Änderung der Heizungsvorlauftemperatur in Abhängigkeit von der Größe der Raumtemperaturdifferenz $\Delta T_R$ unterschied-

lich schnell.

Eine besonders vorteilhafte und zweckmäßige Ausführungsform der erfindungsgemäßen Anordnung beinhaltet, daß ein Maximalwertfinder vorgesehen ist, der die maximale Raumtemperaturdifferenz der Räume ermittelt, daß ein Vergleicher vorgesehen ist, der die maximale Raumtemperaturdifferenz mit einem vorgebbaren oberen und unteren Grenzwert vergleicht, daß ein Umschalter vorgesehen ist, der aus dem generierten Vergleichsergebnis einen Änderungswert für die Heizungsvorlauftemperatur erzeugt und daß ein Addierer vorgesehen ist, der aus diesem erzeugten Änderungswert und dem bisherigen Wert der Heizungsvorlauftemperatur einen neuen Wert für die Heizungsvorlauftemperatur bildet.

Eine besonders vorteilhafte Weiterbildung dieser Ausführungsform sieht vor, daß ist die Heizungsvorlauftemperatur auch in Abhängigkeit von der Öffnungsstellung der Heizkörperventile anpassbar ist. Eine sehr zweckmäßige Ausgestaltung sieht dazu vor, daß ein Maximalwertfinder vorgesehen ist, der die maximale Öffnungsstellung der Heizkörperventile der Räume ermittelt, und daß ein Vergleicher vorgesehen ist, der die maximale Öffnungsstellung der Heizkörperventile mit einem vorgebbaren Öffnungswert vergleicht, und daß Umschalter vorgesehen sind, die aus dem generierten Vergleichsergebnis einen Änderungswert für die Heizungsvorlauftemperatur erzeugen, welche auf einen Addierer zur Bildung eines neuen Werts für die Heizungsvorlauftemperatur gebbar sind.

Gemäß einer zweckmäßigen Verbesserung dieser besonderen Ausführungsform ist ein Multiplikator vorgesehen, der bei Auftreten eines von Null bzw. von einem vorgegebenen Wert abweichenden Wertes der ermittelten maximalen Raumtemperaturdifferenz diesen Wert mit einem vorgebbaren Wert multipliziert, um einen entsprechend erhöhten Änderungswert für die Heizungsvorlauftemperatur zu generieren. Dadurch wird eine schnellere Anhebung oder Absenkung der Heizungsvorlauftemperatur erzielt.

Bei der Heizungsvorlauftemperatur kann es sich um die Vorlauftemperatur eines direkten Heizkreises oder die Vorlauftemperatur in einem Mischerheizkreis handeln. Gemäß einer weiteren zweckmäßigen Ausgestaltung der Erfindung ist das Heizgerät und/oder die Heizungspumpe abstellbar, wenn bei der Reduzierung der Heizungsvorlauftemperatur ein minimaler Wert unterschritten wird.

Das erfindungsgemäße Verfahren ist gekennzeichnet durch das Vorhandensein von thermoelektrisch oder motorisch verstellbaren Heizkörperventilen an den Heizkörpern in den einzelnen Räumen, die Beeinflussung und Verstellung der Heizkörperventile durch in den Räumen vorgesehene Raumtemperaturregler, ein Bussystem, über welches ein Steuergerät, die Raumtemperaturregler und die Heizkörperventile Informationen austauschen können, und durch ein Steuergerät, welches unter Erfassung der jeweiligen Raumtemperaturen die Heizungsvorlauftemperatur entsprechend dem Wärmebedarf vorgibt.

Vorteilhafte Weiterbildungen und Verbesserungen des erfindungsgemäßen Verfahrens sind in den zugehörigen abhängigen Verfahrensansprüchen niedergelegt. So beinhaltet eine vorteilhafte Ausführung des Verfahrens, daß der Wärmebedarf durch Regelung der Heizungsvorlauftemperatur auf den niedrigst möglichen Wert durch Minimierung optimiert wird.

Eine besonders vorteilhafte Weiterbildung des erfindungsgemäßen Verfahrens sieht vor, daß das Steuergerät die Informationen der Raumtemperaturregler zyklisch abfragt, soweit keine vorzeitigen Änderungsmeldungen von diesen auf den Bus gegeben werden.

In zweckmäßiger Ausgestaltung des erfindungsgemäßen Verfahrens werden durch das Steuergerät verschiedene Bedarfsituationen anhand der ermittelten Temperaturdifferenz geregelt, wobei bei kleiner Temperaturdifferenz die Heizungsvorlauftemperatur vorsichtig in kleinen Temperaturänderungsschritten geändert wird, und wobei bei großer Temperaturdifferenz die Heizungsvorlauftemperatur kräftiger in größeren Temperaturänderungsschritten geändert wird, um eine schnellere Aufheizung durch schnelles Anheben der Heizungsvorlauftemperatur oder schnellere Optimierung durch schnelle Absenkung der Heizungsvorlauftemperatur zu erreichen.

Gemäß einer vorteilhaften Weiterbildung des erfindungsgemäßen Verfahrens kann dann, wenn bei der Reduzierung der Heizungsvorlauftemperatur ein minimaler Wert unterschritten wird, das Heizgerät und/oder die Heizungspumpe abgestellt werden.

Eine weitere besonders vorteilhafte Ausgestaltung des erfindungsgemäßen Verfahrens, welche eine sehr feinfühlige Regelung gewährleistet, beinhaltet, daß das Steuergerät bei ausgeregeltem Zustand die Öffnungsstellung der Heizkörperventile bei Unterschreiten eines vorgegebenen Wertes berücksichtigt und die Heizungsvorlauftemperatur vorsichtig in kleinen konstanten Temperaturänderungsschritten absenkt.

Eine andere sehr vorteilhafte und zweckmäßige Ausgestaltung des erfindungsgemäßen Verfahrens besteht darin, daß die wärmebedarfsgeführte Regelung mit der Erfassung von Raumtemperatur und/oder der Öffnungsstellung der Heizkörperventile programmgesteuert durch das Steuergerät durchgeführt wird.

Zeichnung

Die Erfindung ist anhand zweier in der Zeichnung dargestellter Ausführungsbeispiele in der nachfolgenden Beschreibung näher erläutert. Es zeigen:

Fig. 1    schematisch eine Anordnung gemäß der Erfindung;

Fig. 2    schematisch die Regelungsstruktur, die der

Fig. 3 schematisch ein Blockschaltbild einer ersten, hardwaremäßigen Realisierung der Erfindung, und

Fig. 4 schematisch das Ablaufdiagramm einer zweiten, softwaremäßigen Realisierung der Erfindung.

Beschreibung der Ausführungsbeispiele

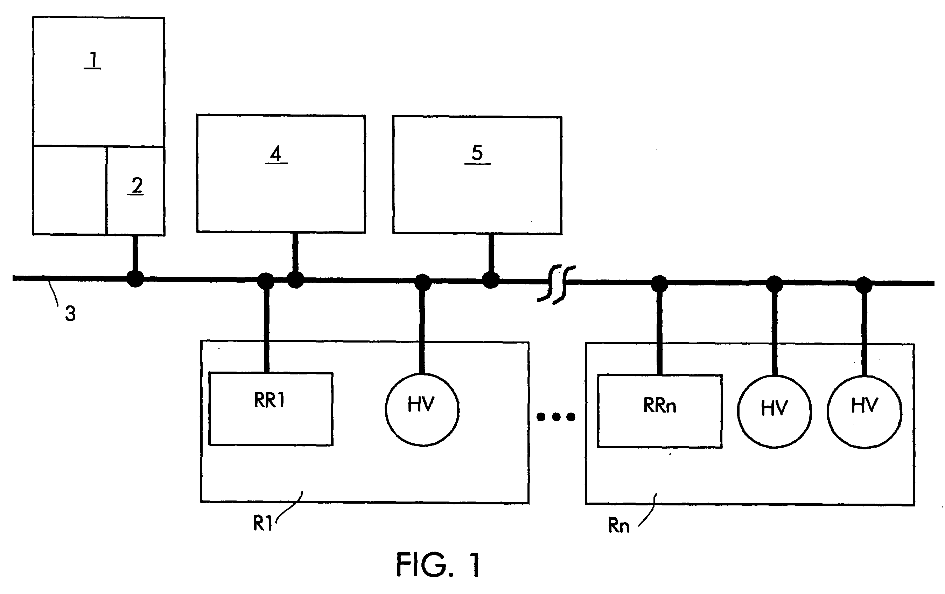

Die in Fig. 1 schematisch dargestellte erfindungsgemäße Anordnung enthält ein Heizgerät 1, das eine Gastherme oder ein Kessel sein kann. Das Heizgerät wird von einem Steuergerät 2 beeinflußt, gesteuert und geregelt. Das Heizgerät 1 erwärmt einen Wärmeträger, insbesondere Wasser, mit welchem in einem Gebäude vorgesehene Räume R1 bis Rn über den erwärmten Wärmeträger erwärmt werden. Die Zufuhr des Wärmeträgers zu den einzelnen Heizkörpern wird in jedem Raum über thermoelektrisch oder motorisch verstellbare Heizkörperventile HV gesteuert. In jedem Raum R1 bis Rn ist ein Raumtemperaturregler RR1 bis RRn vorgesehen, der über das oder die in dem jeweiligen Raum vorgesehene(n) thermoelektrisch oder motorisch verstellbare(n) Heizkörperventil(e) HV die Temperatur im zugehörigen Raum regelt. Das Steuergerät 2, die Raumtemperaturregler RR und die Heizkörperventile HV sind an ein vorgesehenes Bussystem 3 angeschlossen und somit miteinander informativ verbindbar. Optional können ein Mischkreisregler 4 und ein Bediengerät 5 vorgesehen und an den Bus 3 angeschlossen sein.

Gemäß der Erfindung ist weiterhin vorgesehen, daß die so gestaltete Anordnung die vom Heizgerät 1 erwärmte Heizungsvorlauftemperatur $T_{VL}$ in Abhängigkeit von der Raumtemperatur $T_R$ und gegebenfalls auch der Öffnungsstellung $V_S$ der thermoelektrisch oder motorisch verstellbaren Heizkörperventile HV mittels des Steuergerätes 2 optimiert und an den tatsächlichen Wärmebedarf des Gebäudes anpaßt.

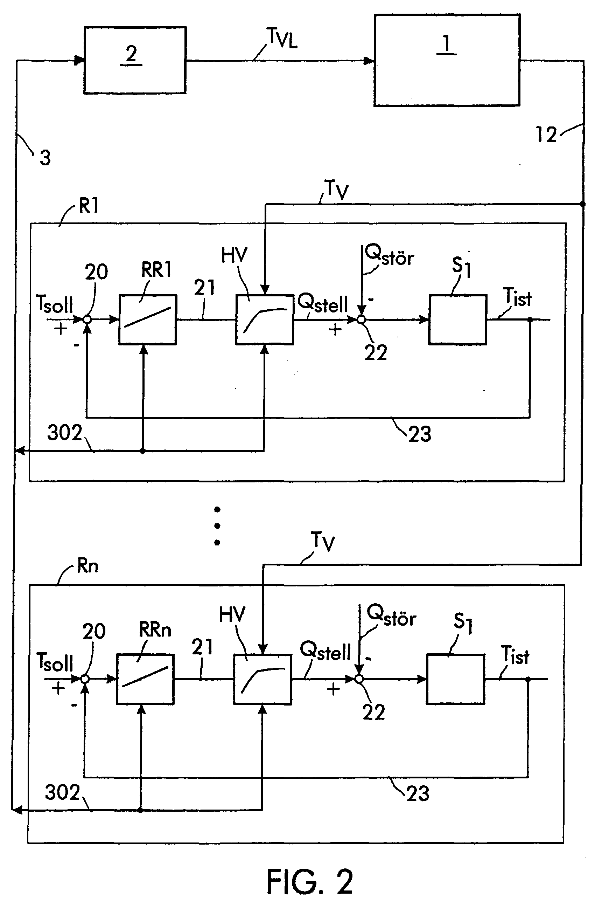

In Fig. 2 ist die Regelstruktur schematisch dargestellt, welche der erfindungsgemäßen Anordnung und dem erfindungsgemäßen Verfahren zugrunde liegt. Die einzelnen Räume R1 bis Rn können mit den in ihnen angeordneten Raumtemperaturreglern RR1 bis RRn und den von diesen gesteuerten Heizkörperventilen HV regelungstechnisch als autarke Regelkreise angesehen werden. Am Eingang 20 des Raumtemperaturreglers RR wird die gewünschte Raumtemperatur des entsprechenden Raums R als Führungsgröße $T_{soll}$ vorgegeben. Dies kann durch manuelle Einstellung am Raumtemperaturregler RR erfolgen oder ihm über Fernsteuerung über z.B. den Bus 3 mitgeteilt werden. Der Raumtemperaturregler RR wirkt in geeigneter Weise auf die Stellglieder ein, beispielsweise gibt er über Leitung 21 die notwendige Öffnungsstellung $V_S$ des zugeordneten Heizkörperventils HV vor, und regelt die Raumtemperatur der Regelstrecke S über die Rückführung 23 aus. In diesem Regelkreis wird die über das Heizkörperventil HV zugeführte Wärmeenergie $Q_{stell}$ außerdem noch von der bereitgestellten Vorlauftemperatur $T_V$ beeinflußt. Ist beispielsweise die Heizungsvorlauftemperatur $T_V$ zu gering, dann ist der Raumtemperaturregler RR nicht in der Lage, die am Punkt 22 als Störgröße $Q_{stör}$ einwirkenden Wärmeverluste auszugleichen und die gewünschte Raumtemperatur zu erreichen. Dagegen wird bei zu hoher Heizungsvorlauftemperatur Energie verschwendet.

Mit Hilfe der Erfindung wird die geeignete Heizungsvorlauftemperatur $T_{VL}$ ermittelt, bei welcher der tatsächliche Wärmebedarf des Gebäudes genau abgedeckt ist. Dabei sind drei Fälle zu unterscheiden:

1. Es gibt mindestens einen Raum, der keine Temperaturdifferenz $\Delta T$ aufweist, d.h. keinen Unterschied zwischen Solltemperatur $T_{soll}$ und Isttemperatur $T_{ist}$ über den Bus 3 an das Steuergerät 2 meldet.
2. Mindestens ein Raumtemperaturregler RR meldet über den Bus 3 eine positive Temperaturdifferenz $\Delta T$, d.h. in diesem Raum ist es zu kalt.
3. Alle Räume melden eine negative Temperaturdifferenz $\Delta T$, d.h. in allen Räumen ist es zu warm.

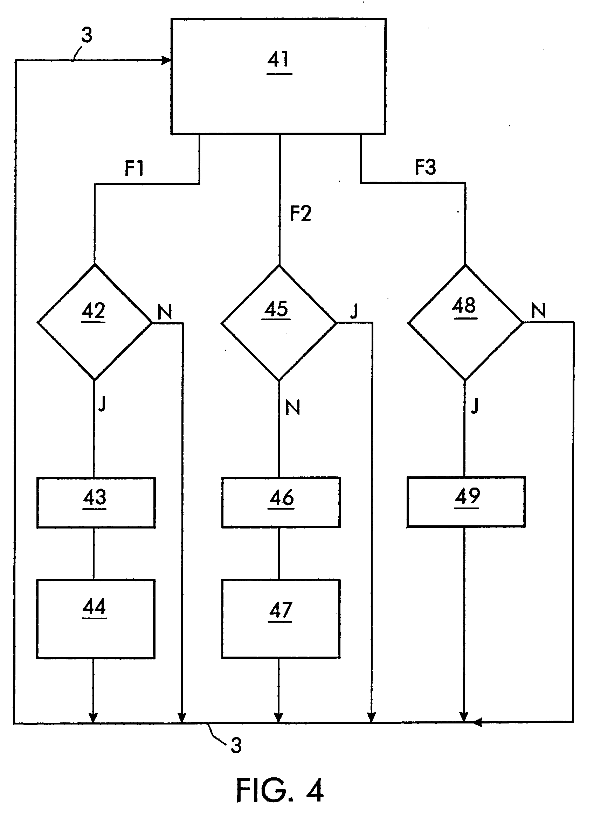

Die für die drei verschiedenen Fälle vorzunehmenden Aktionen werden anschließend anhand des in Fig. 4 dargestellten Ablaufdiagramms einer softwaremäßigen Realisierung der Erfindung erläutert.

Im Block 41 wird eine Fallunterscheidung nach den vorstehend genannten Fällen vorgenommen, nämlich Fall 1, F1: Kein zusätzlicher Wärmebedarf, Fall 2, F2: In mindestens einem Raum ist es zu kalt, und Fall 3, F3: in allen Räumen ist es zu warm.

Im Fall 1, F1, besteht kein zusätzlicher Wärmebedarf. Alle Räume R1 bis Rn sind in der Lage, mindestens die gewünschte Raumtemperatur $T_{soll}$ einzustellen. Das Programm prüft nun bei Verzweigung 42, ob die Heizungsvorlauftemperatur $T_{VL}$ abgesenkt werden kann. Ist dies nicht der Fall, wird über die Nein-Leitung N zum Block 41 zurückgekehrt. Wenn abgesenkt werden kann, dann geht es über die Ja-Leitung J zum Block 43, durch den die Absenkung der Heizungsvorlauftemperatur $T_{VL}$ um einem bestimmten Betrag veranlaßt wird. Mit Block 44 wird nach der Absenkung eine zeitlich begrenzte Bearbeitungssperre für den entsprechenden Raum eingeführt, d.h. eine erneute Überprüfung wird erst nach Ablauf einer Wartezeit von z.B. 10 Minuten durchgeführt. Das Programm kehrt zu Block 41 zurück.

Bei diesem Fall 1, F1, wird also überprüft, ob die angebotene Heizungsvorlauftemperatur $T_{VL}$ optimal, d.h. so gering wie möglich ist. Dies ist dann erreicht, wenn es einen Raum gibt, in welchem das oder die Heizkörperventile HV einen bestimmten Mindestöffnungsgrad von z.B. 70% oder 80% aufweisen. Ist dies nicht der Fall, wird die Heizungsvorlauftemperatur $T_{VL}$ um einen definierten Betrag abgesenkt. Dieser Betrag wird in Abhängigkeit vom größten Öffnungsgrad des Heizkörperventils, d.h. der Öffnungsstellung $V_S$ des Heizkörperventils HV geeignet eingestellt. Wird nach Absenkung der Heizungsvorlauftemperatur $T_{VL}$ und nach Ablauf einer genügend großen Wartezeit von beispielsweise 10 Minuten bei der Fallbestimmung in Block 41 immer noch der Fall 1, F1, festgestellt, so wird der Durchlauf wiederholt.

Bei der Feststellung des Falles 2, F2, in Block 41 wird nach Verzweigung 45 gegangen und dort überprüft, ob der betreffende Raum über das darin vorhandene Heizkörperventil HV ausgeregelt werden kann. Ist dies der Fall, wird über die Ja-Leitung J zu Block 41 zurückgegangen. Ist dies jedoch nicht der Fall, dann wird über die Nein-Leitung N zu Block 46 gegangen und die Heizungsvorlauftemperatur $T_{VL}$ angehoben. Mit Block 47 wird nach der Anhebung eine zeitlich begrenzte Bearbeitungssperre für den entsprechenden Raum eingeführt, d.h. eine erneute Überprüfung wird erst nach Ablauf einer Wartezeit von z.B. 10 Minuten durchgeführt. Das Programm kehrt zu Block 41 zurück.

Bei diesem Fall 2, F2, gibt es also mindestens einen Raum, in dem es zu kalt ist. Es wird nun ermittelt, ob der Raumtemperaturregler in der Lage ist, allein über das Heizkörperventil HV und ohne Erhöhung der Heizungsvorlauftemperatur $T_{VL}$ die Raumtemperatur auszuregeln. In vorteilhafter Ausgestaltung der Erfindung wird dabei bei kleinen Temperaturdifferenzen, beispielsweise <2K oder <5K, geprüft, ob bei zu 100% geöffnetem Heizkörperventil der Raumtemperaturregler nach einer bestimmen Zeit, z.B. 10 Minuten, eine steigende Raumtemperatur über den Bus 3 meldet. Ist dies nicht der Fall, wird die Heizungsvorlauftemperatur $T_{VL}$ um einen bestimmten Betrag angehoben. Danach wird das Programm mit der Fallunterscheidung in Block 41 fortgesetzt.

Entsprechend einer vorteilhaften Ausgestaltung der Erfindung wird bei großen Temperaturdifferenzen $\Delta T$ die Heizungsvorlauftemperatur $T_{VL}$ um einen erhöhten Betrag $k^*\Delta T$ angehoben, um die Ausregelung durch den Raumtemperaturregler RR zu beschleunigen. Anschließend erfolgt erneut die Fallunterscheidung in Block 41.

Bei der Feststellung des Falles 3, F3, in Block 41 wird nach Verzweigung 48 gegangen und dort überprüft, ob die Heizungsvorlauftemperatur $T_{VL}$ abgesenkt werden kann. Ist dies nicht der Fall, wird über die Nein-Leitung N zu Block 41 zurückgegangen. Ist dies jedoch der Fall, dann wird über die Ja-Leitung J zu Block 49 gegangen und die Heizungsvorlauftemperatur $T_{VL}$ abgesenkt. Daraufhin kehrt das Programm wieder zu Block 41 zur nächsten Fallunterscheidung zurück. Dies wird solange fortgesetzt, bis die optimale Einstellung erreicht ist.

Bei diesem Fall 3, F3, wird davon ausgegangen, daß es in allen Räumen zu warm ist und die Heizkörperventile geschlossen sind. Die Heizungsvorlauftemperatur $T_{VL}$ kann also abgesenkt werden. Entsprechend der bereits erwähnten vorteilhaften Ausgestaltung der Erfindung wird auch hier bei großen Temperaturdifferenzen $\Delta T$ die Heizungsvorlauftemperatur $T_{VL}$ um einen erhöhten Betrag $k^*\Delta T$ verändert, d.h. hier konkret abgesenkt, um die Ausregelung durch den Raumtemperaturregler RR zu beschleunigen. Anschließend erfolgt erneut die Fallunterscheidung in Block 41. Die Absenkung kann solange erfolgen, bis der Frostschutz des Gerätes aktiv wird.

Das nach der Erfindung gestaltete Programm kann in seinem adaptiven Verhalten mit Hilfe von neuronalen Netzen und Fuzzy-Logik verbessert werden. Dabei ist es dann auch möglich, vorausschauende Eigenschaften anzutrainieren.

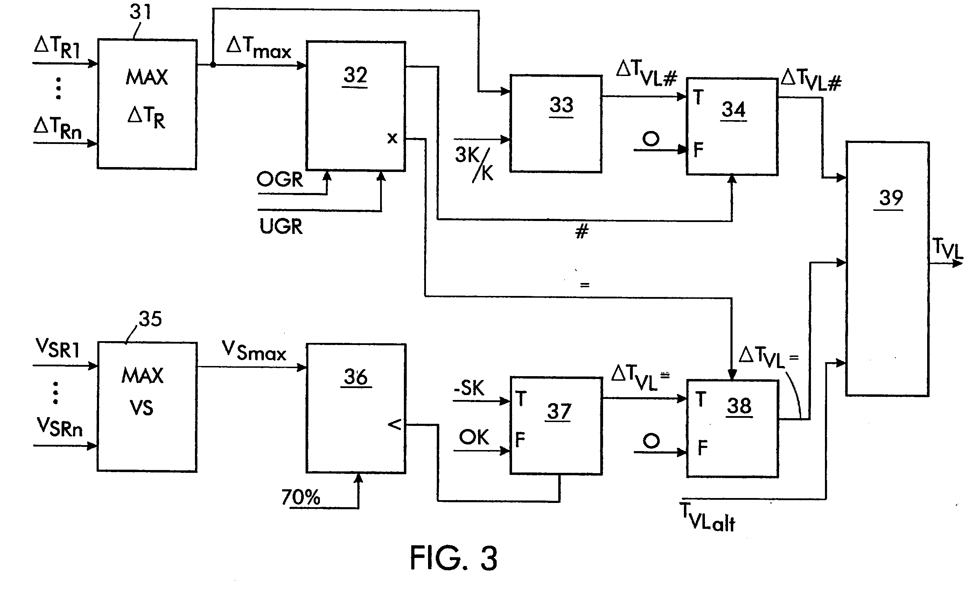

Anhand des in Fig. 3 schematisch dargestellten Blockschaltbildes wird nachfolgend eine mögliche hardwaremäßige Realisierung der Erfindung erläutert, wie sie im Steuergerät 2 realisiert sein kann.

Die wärmebedarfsgeführte Regelung gemäß der Erfindung erfaßt die Raumtemperatur $T_R$ und die Öffnungsstellung $V_S$ der Heizkörperventile HV. Einem Maximalwertfinder 31 für die Ermittlung der maximalen Temperaturdifferenz $\Delta T_R = T_{Rsoll} - T_{Rist}$ werden als Eingänge die Temperaturdifferenzen $\Delta T_{R1}$ bis $\Delta T_{Rn}$ aller Räume R1 bis Rn zugeführt. Aus diesen ermittelt MAX $\Delta T_R$ 31 die maximale Temperaturdifferenz $\Delta T_{max}$ an seinem Ausgang. Dieses Signal wird einem Vergleicher 32 zugeführt. Als Eingangssignale erhält dieser Vergleicher 32 weiterhin ein Signal OGR für einen definierten oberen Grenzwert und ein Signal UGR für einen definierten unteren Grenzwert der Raumtemperaturdifferenz $\Delta T_R$. Der Vergleicher 32 weist zwei Ausgänge auf, die als Gleich-Ausgang = und als Ungleich-Ausgang # bezeichnet sind.

Liegt die vom Maximalwertfinder 31 ermittelte maximale Temperaturdifferenz $\Delta T_{max}$ zwischen der definierten Unter- und Obergrenze, UGR < $\Delta T_{max}$ < OGR, beispielsweise -0,6K < $\Delta T_{max}$ < +0,6K , um den Wert 0, dann gibt es keinen Raum, der zusätzlich Wärme fordert. Es gibt aber mindestens einen Raum, bei dem der Wärmebedarf gedeckt ist. Das beim Vergleicher 32 in diesem Fall erfüllte Ausgangssignal ist das = Signal am Gleich-Ausgang =.

Liegt die vom Maximalwertfinder 31 ermittelte maximale Temperaturdifferenz $\Delta T_{max}$ außerhalb der definierten Grenzen, dann ist der Ungleich-Ausgang # erfüllt. In diesem Fall gibt es zumindest einen Raum, der Wärmebedarf zeigt, oder es ist in allen Räumen zu warm. Falls $\Delta T_{max}$ > OGR ist, ist es im Raum zu kalt und es liegt zusätzlicher Wärmebedarf vor. Falls $\Delta T_{max}$ < UGR ist, ist es in allen Räumen zu warm. Über einen Umschalter 34 werden die jeweiligen positiven oder negativen Änderungswerte $\Delta_{TVL\#}$ für die Heizungsvorlauftemperatur $T_{VL}$ auf einen Addierer 39 gegeben. Dort wird der Änderungswert $\Delta_{TVL\#}$, er kann positiv oder auch negativ sein, zum alten Wert $T_{VL\ alt}$ addiert, so daß am Ausgang des Addierers 39 eine neue geänderte Steuerungsgröße für die Heizungsvorlauftemperatur $T_{VL}$ ansteht.

Gemäß einer besonderen Ausgestaltung der Erfindung wird bei wesentlicher Temperaturabweichung eine erhöhte Anhebung zum schnelleren Aufheizen oder eine verstärkte Absenkung zur schnelleren Optimierung durchgeführt. Dazu ist nach dem Ausführungsbeispiel in Fig. 3 ein Multiplikator 33 vorgesehen, dem die ermittelte maximale Temperaturdifferenz $\Delta T_{max}$ vom Maximalwertfinder 31 zugeführt wird. Übersteigt dieser Wert bestimmte Werte, beispielsweise die vorgegebenen OGR und UGR, dann wird $\Delta T_{max}$ mit einem bestimmten Faktor, z.B. 3K/K multipliziert. Der dem Addierer 39 zugeführte Änderungswert $\Delta_{TVL\#}$ für die an dessen Ausgang anstehende Steuerungsgröße für die Heizungsvorlauftemperatur $T_{VL}$ ist dementsprechend vergrößert.

Die in Fig. 3 dargestellte Ausführungsform der Erfindung enthält einen weiteren Maximalwertfinder 35 für die Ermittlung der maximalen Öffnungsstellung $V_{S max}$ aller Heizkörperventile in den verschiedenen Räumen, die dem Maximalwertfinder 35 als Eingangswerte $V_{SR1}$ bis $V_{SRn}$ der n Räume zugeführt werden. Aus diesen Werten ermittelt der Maximalwertfinder 35 an seinem Ausgang den Wert $V_{Smax}$, der einem Vergleicher 36 zugeführt wird. Dem Vergleicher 36 wird als weiterer Eingangswert ein bestimmter Wert zugeführt, der einen ausgewählten Öffnungsgrad, beispielsweise 70% oder 80% des maximal möglichen Öffnungsgrades des Heizkörperventils HV repräsentiert. Durch die Erfindung wird geprüft, ob der Wärmebedarf gedeckt ist, ob das Wärmeangebot optimal ist bzw. ob ein Überangebot von Wärme vorhanden ist.

Ein Überangebot wird dann angenommen, wenn die Öffnungsstellung $V_S$ des Heizkörperventils einen bestimmten Wert unterschreitet, d.h. beispielsweise $V_{Smax}$ < 70% vom Vergleicher 36 festgestellt wird. Falls dies der Fall ist, wird die Heizungsvorlauftemperatur $T_{VL}$ vorsichtig, d.h. in kleinen Schritten von beispielsweise 5K oder auch nur 2K erniedrigt. In der Anordnung gemäß Fig. 3 wird diese Veränderung in kleinen Schritten vom Umschalter 37 bei Vorliegen des Vergleichsergebnisses vom Vergleicher 36 als $\Delta T_{VL=}$ am Ausgang generiert und dann von einem weiteren Umschalter 38 auf den Addierer 39 als Eingangssignal durchgeschaltet, wenn vom Vergleicher 32 der Gleich-Ausgang = aktiviert ist, was auf geringe Veränderungsgrößen hinweist. Durch den Addierer 39, dem also neben dem alten Wert $T_{VLalt}$ der Heizungsvorlauftemperatur $T_{VL}$ entweder der kleine Änderungswert $\Delta T_{VL=}$ oder der größere Änderungswert $\Delta_{TVL\#}$ zugeführt wird, wird die Heizungsvorlauftemperatur $T_{VL}$ in Richtung auf optimale Werte hin vorgegeben.

In vorteilhafter Weise ist bei vorliegender Erfindung die Größe der Temperaturabsenkung und -anhebung immer proportional zur Temperaturdifferenz eines Raumes. Bei kleinen Differenzen wird vorsichtig geändert, bei großen Differenzen wird kräftiger geändert, wodurch eine schnellere Aufheizung bzw. Optimierung ermöglicht ist. Im ausgeregelten Zustand wird, falls $V_{Smax}$ < 70% ist, oder allgemein der Ventilöffnungsgrad einen bestimmten Wert unterschreitet, vorsichtig um kleine konstante Temperaturdifferenzen abgesenkt.

Von besonderem Vorteil ist es, daß erfindungsgemäß die wärmebedarfsgeführte Regelung mit der Erfassung von Raumtemperatur und Öffnungsstellung der Heizkörperventile programmgesteuert durch das Steuergerät durchgeführt wird. Dadurch ist eine erhöhte Flexibilität gegeben.

**Patentansprüche**

1. Anordnung zur Anpassung der Leistung eines Heizgerätes (1) an den tatsächlichen Wärmebedarf, beispielsweise eines Gebäudes, wobei innerhalb mehrerer Räume (R1 - Rn) eine Einzelraumtemperaturregelung über das oder die Heizkörperventile (HV) vorgesehen ist und die Heizungsvorlauftemperatur ($T_{VL}$) des Heizgerätes (1) über eine Steuerung bzw. Regelung bestimmbar ist,
dadurch gekennzeichnet, daß

   das Heizgerät (1) von einem Steuergerät (2) beeinflußt wird, in den Räumen (R1 - Rn) thermoelektrisch oder motorisch verstellbare Heizkörperventile (HV) an den Heizkörpern vorgesehen sind,
   in den Räumen Raumtemperaturregler (RR1 - RRn) vorgesehen sind, welche die Heizkörperventile (HV) beeinflussen und verstellen,
   ein Bussystem (3) vorgesehen ist, über welches das Steuergerät (2), die Raumtemperaturregler (RR1 - RRn) und die Heizkörperventile (HV) informativ verbindbar sind, und die Heizungsvorlauftemperatur ($T_{VL}$) in Abhängigkeit von der Raumtemperatur ($T_R$) mittels des Steuergerätes (2) optimierbar und an den Wärmebedarf anpaßbar ist.

2. Anordnung nach Anspruch 1, dadurch gekennzeichnet, daß die Heizungsvorlauftemperatur ($T_{VL}$) auf den niedrigst möglichen Wert abgesenkt wird.

3. Anordnung nach Anspruch 1 oder 2, dadurch gekennzeichnet, daß eine Änderung der Heizungsvorlauftemperatur ($T_{VL}$) dann erfolgt, wenn die Raumtemperaturdifferenz ($\Delta T_R = T_{Rsoll} - T_{Rist}$) eine bestimmte positive Größe überschreitet bzw. eine bestimmte negative Größe unterschreitet.

4. Anordnung nach Anspruch 3, dadurch gekennzeichnet, daß die Änderung der Heizungsvorlauftemperatur ($T_{VL}$) in Abhängigkeit von der Größe der Raumtemperaturdifferenz ($\Delta T_R$) unterschiedlich schnell erfolgt.

5. Anordnung nach einem der vorigen Ansprüche, dadurch gekennzeichnet, daß ein Maximalwertfinder (31) vorgesehen ist, der die maximale Raumtemperaturdifferenz ($\Delta T_{Rmax}$) der Räume (R1 - Rn) ermittelt, daß ein Vergleicher (32) vorgesehen ist, der die maximale Raumtemperaturdifferenz ($\Delta T_{Rmax}$) mit einem vorgebbaren oberen (OGR) und unteren Grenzwert (UGR) vergleicht, daß ein Umschalter (34) vorgesehen ist, der aus dem generierten Vergleichsergebnis einen Änderungswert ($\Delta T_{VL\#}$) für die Heizungsvorlauftemperatur ($T_{VL}$) erzeugt und daß ein Addierer (39) vorgesehen ist, der aus diesem erzeugten Änderungswert ($\Delta T_{VL\#}$) und dem bisherigen Wert ($T_{VLalt}$) der Heizungsvorlauftemperatur einen neuen Wert für die Heizungsvorlauftemperatur ($T_{VL}$) bildet.

6. Anordnung nach einem der vorigen Ansprüche, dadurch gekennzeichnet, daß die Heizungsvorlauftemperatur ($T_{VL}$) auch in Abhängigkeit von der Öffnungsstellung ($V_{Smax}$) der Heizkörperventile (HV) anpassbar ist.

7. Anordnung nach Anspruch 5 und 6, dadurch gekennzeichnet, daß ein Maximalwertfinder (35) vorgesehen ist, der die maximale Öffnungsstellung ($V_{Smax}$) der Heizkörperventile (HV) der Räume (R1 - Rn) ermittelt, und daß ein Vergleicher (36) vorgesehen ist, der die maximale Öffnungsstellung ($V_{Smax}$) der Heizkörperventile (HV) mit einem vorgebbaren Öffnungswert (70%) vergleicht, und daß Umschalter (37, 38) vorgesehen sind, die aus dem generierten Vergleichsergebnis einen Änderungswert ($\Delta T_{VL=}$) für die Heizungsvorlauftemperatur ($T_{VL}$) erzeugen, welche auf einen Addierer (39) zur Bildung eines neuen Werts für die Heizungsvorlauftemperatur ($T_{VL}$) gebbar sind.

8. Anordnung nach Anspruch 5, 6 oder 7, dadurch gekennzeichnet, daß ein Multiplikator (33) vorgesehen ist, der bei Auftreten eines von Null bzw. von einem vorgegebenen Wert abweichenden Wertes der ermittelten maximalen Raumtemperaturdiffernz ($\Delta T_{max}$) diesen Wert mit einem vorgebbaren Wert (3K/K) multipliziert, um einen entsprechend erhöhten Änderungswert für die Heizungsvorlauftemperatur zu generieren.

9. Anordnung nach einem der vorigen Ansprüche, dadurch gekennzeichnet, daß die Heizungsvorlauftemperatur ($T_{VL}$) die Vorlauftemperatur eines direkten Heizkreises oder die Vorlauftemperatur in einem Mischerheizkreis ist.

10. Anordnung nach einem der vorigen Ansprüche, dadurch gekennzeichnet, daß das Heizgerät und/oder die Heizungspumpe abstellbar ist, wenn bei der Reduzierung der Heizungsvorlauftemperatur ($T_{VL}$) ein minimaler Wert unterschritten wird.

11. Verfahren zur Regelung der Heizungsvorlauftemperatur eines Heizgerätes, welches einen oder mehrere Heizkörper in mehreren Räumen eines Gebäudes mit Wärme versorgt, gekennzeichnet durch

     das Vorhandensein von thermoelektrisch oder motorisch verstellbaren Heizkörperventilen an den Heizkörpern in den einzelnen Räumen, die Beeinflussung und Verstellung der Heizkörperventile durch in den Räumen vorgesehene Raumtemperaturregler, ein Bussystem, über welches ein Steuergerät, die Raumtemperaturregler und die Heizkörperventile Informationen austauschen, und durch ein Steuergerät, welches unter Erfassung der jeweiligen Raumtemperaturen die Heizungsvorlauftemperatur entsprechend dem Wärmebedarf vorgibt.

12. Verfahren nach Anspruch 11, dadurch gekennzeichnet, daß der Wärmebedarf durch Regelung der Heizungsvorlauftemperatur auf den niedrigst möglichen Wert durch Minimierung optimiert wird.

13. Verfahren nach Anspruch 11 oder 12, dadurch gekennzeichnet, daß das Steuergerät die Informationen der Raumtemperaturregler zyklisch abfragt, soweit keine vorzeitigen Änderungsmeldungen von diesen auf den Bus gegeben werden.

14. Verfahren nach einem der Ansprüche 11 bis 13, dadurch gekennzeichnet, daß durch das Steuergerät verschiedene Bedarfssituationen anhand der ermittelten Temperaturdifferenz geregelt werden, wobei bei kleiner Temperaturdifferenz die Heizungsvorlauftemperatur vorsichtig in kleinen Temperaturänderungsschritten geändert wird, und wobei bei großer Temperaturdifferenz die Heizungsvorlauftemperatur kräftiger in größeren Temperaturänderungsschritten geändert wird, um eine schnellere Aufheizung oder Optimierung zu erreichen.

15. Verfahren nach einem der Ansprüche 11 bis 13, dadurch gekennzeichnet, daß dann, wenn bei der Reduzierung der Heizungsvorlauftemperatur ein minimaler Wert unterschritten wird, das Heizgerät und/oder die Heizungspumpe abgestellt werden kann.

16. Verfahren nach einem der Ansprüche 11 bis 14, dadurch gekennzeichnet, daß das Steuergerät bei ausgeregeltem Zustand die Öffnungsstellung der Heizkörperventile bei Unterschreiten eines vorgegebenen Wertes berücksichtigt und die Heizungsvorlauftemperatur vorsichtig in kleinen konstanten Temperaturänderungsschritten absenkt.

17. Verfahren nach einem der Ansprüche 11 bis 16, dadurch gekennzeichnet, daß die wärmebedarfsgeführte Regelung mit der Erfassung von Raumtemperatur und/oder der Öffnungsstellung der Heizkörperventile programmgesteuert durch das Steuergerät durchgeführt wird.

FIG. 1

EP 0 864 955 A1

FIG. 2

FIG. 3

FIG. 4

Europäisches
Patentamt

**EUROPÄISCHER RECHERCHENBERICHT**

Nummer der Anmeldung

EP 98 10 3756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DE 27 14 511 B (DANFOSS A/S) 2.Februar 1978<br>* Spalte 6, Zeile 45 - Spalte 7, Zeile 5; Abbildungen 1,4 *<br>* Spalte 2, Zeile 35 - Spalte 3, Zeile 35 * | 1-3,5,9, 11,12 | G05D23/19<br>F24D19/10 |
| | --- | | |
| X | EP 0 594 886 A (LANDYS & GYR BUSINESS SUPPORT AG) 4.Mai 1994<br>* Seite 4, Zeile 13 - Seite 5, Zeile 46; Abbildungen 1,2 * | 1-4,6, 11,12, 14,17 | |
| | --- | | |
| X | DE 30 36 661 A (SIEMENS AG) 22.April 1982<br>* Seite 6, Zeile 26 - Seite 8, Zeile 35; Abbildung 1 * | 1,2,6,7, 9,11,12 | |
| | --- | | |
| X | DE 34 09 742 A (SATCHWELL BIRKA REGELUNGSTECHNIK GMBH) 4.Oktober 1984<br>* Seite 10, Absatz 3 - Seite 13, Absatz 1; Abbildung 1 * | 1,2,6,9, 11,12 | RECHERCHIERTE SACHGEBIETE (Int.Cl.6) |
| | --- | | G05D<br>F24D |
| A | DE 195 12 995 A (JOH. VAILLANT GMBH) 19.Oktober 1995<br>* Spalte 3, Zeile 1 - Zeile 28; Abbildung 1 * | 1,10,11, 15 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 25.Juni 1998 | Goetz, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.....................................................................
& : Mitglied der gleichen Patentfamilie, übereinstimmendes Dokument

EPO FORM 1503 03.82 (P04C03)